Europäisches Patentamt

European Patent Office

Office européen des brevets

(19)

(11) **EP 1 437 520 A2**

(12) **EUROPÄISCHE PATENTANMELDUNG**

(43) Veröffentlichungstag:
14.07.2004 Patentblatt 2004/29

(51) Int Cl.⁷: **F16D 48/00**

(21) Anmeldenummer: 03104672.5

(22) Anmeldetag: **12.12.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **13.01.2003 DE 10300930**

(71) Anmelder: **SIEMENS AKTIENGESELLSCHAFT
80333 München (DE)**

(72) Erfinder:
• **Deiml, Matthias**
**93093, Donaustauf (DE)**
• **Graf, Friedrich**
**93161, Sinzing (DE)**
• **Michau, Peter**
**38102, Braunschweig (DE)**
• **Nelles, Oliver**
**93055, Regensburg (DE)**

(54) **Verfahren zum Steuern einer automatisch betätigten Kupplung**

(57) Bei dem Verfahren wird das zu übertragende Drehmoment (M) nach einer Kupplungskennlinie (KL) in Abhängigkeit von der Kupplungsposition gesteuert, und die Kupplungskennlinie (KL) wird zur Kompensation von Änderungen des Kupplungsverhaltens korrigiert. Zum Adaptieren der Kupplungskennlinie werden eine Minimal- und eine Maximalkennlinie erzeugt, und eine gültige Kupplungskennlinie (interpolierte KL), die an Einflussgrößen auf das Kupplungsverhalten adaptiert ist, wird durch Interpolation zwischen den Werten der Minimalkennlinie und denen der Maximalkennlinie berechnet.

FIG 3

EP 1 437 520 A2

**Beschreibung**

Die Erfindung betrifft ein Verfahren nach dem Oberbegriff von Anspruch 1. Das Verfahren dient zum Steuern einer automatisch betätigten Kupplung, die zwischen dem Motor und dem Getriebe eines Kraftfahrzeugs angeordnet ist und die durch einen Kupplungsaktuator ein- und ausgerückt wird, dessen Lage von einem Lageregelkreis derart gesteuert wird, dass eine Differenz zwischen einer Sollposition und der Istposition des Ausrückweges der Kupplung ermittelt und die Kupplung in ihre Sollposition gebracht wird, in der ein vorgegebenes Drehmoment von dem Motor auf das Getriebe übertragen wird. Dabei wird das zu übertragende Drehmoment nach einer Kupplungskennlinie in Abhängigkeit von dem Ausrückweg gesteuert, und die Kupplungskennlinie wird zur Kompensation von Änderungen des Kupplungsverhaltens korrigiert.

Um den Kraftstoffverbrauch von Kraftfahrzeugen zu reduzieren und den Fahrkomfort zu erhöhen, werden vermehrt Fahrzeuge mit automatisierten Handschaltgetrieben und Doppelkupplungsgetrieben angeboten. Das für den Fahrkomfort wesentliche Bauteil ist die Kupplung zwischen dem Motor und dem Getriebe. Deren exakte und schnelle Steuerung ist daher für die Zufriedenheit des Fahrers mit seinem Fahrzeug maßgeblich.

Bei einem bekannten Getriebe wird das Reibverhalten der Kupplung nur durch eine von der Kupplungsposition abhängige Kennlinie beschrieben und auf die genaue Kenntnis der Reibbelagstemperatur mangels einer geeigneten Methode oder Messeinrichtung verzichtet (siehe ATZ 11/2001, Seiten 1024-1035). Das Kupplungsdrehmoment M (oder kurz: Kupplungsmoment) wird als Funktion der Kupplungsposition pos (auch als Ausrückweg bezeichnet) modelliert. Der physikalische Ausrückweg, der mit tels eines Positionssensors gemessen wird, wird in Abhängigkeit von einer nicht näher präzisierten Temperatur und einer Antriebsstrangdrehzahl korrigiert, bevor er als Eingangsgröße für eine interpolierte Kennlinie verwendet wird. Die Kennlinie umfasst sechzehn Stützstellen. Zum Kompensieren der Veränderung des Kupplungsverhaltens durch Alterung, Belagverschleiß usw. wird eine Adaption für jeweils eine einzige Stützstelle nach je einer Schaltung durchgeführt, und zwar zu dem Zeitpunkt, zu dem der Kupplungsschlupf wieder null geworden ist.

Als Fehlermaß für die Adaption dient die Differenz zwischen dem Kupplungssollmoment und dem Motoristmoment in diesem Zeitpunkt. Durch dieses Verfahren ist nicht sichergestellt, dass alle Bereiche der Kupplungskennlinie im normalen Fahrbetrieb an die Änderung der Kupplungseigenschaften durch die verschiedenen Einflussfaktoren angepasst werden können. Diese Faktoren sind vor allem die Temperatur der Kupplungsscheibe und der Andruckplatte, aber auch die Alterung und der Verschleiß des Kupplungsbelags, der kurzzeitige Energieeintrag, die Drehzahlen und andere Faktoren.

Der Erfindung liegt die Aufgabe zugrunde, ein Verfahren zu schaffen, mit dem Ungenauigkeiten beim Steuern einer Kupplung durch eine umfassende Adaption der Kupplungskennlinie an die verschiedenen Einflussfaktoren sicher ausgeschaltet werden.

Die Aufgabe der Erfindung wird durch ein Verfahren nach Anspruch 1 gelöst. Dabei werden eine Minimalkennlinie und eine Maximalkennlinie erzeugt, durch die die von der Kupplungsposition abhängigen Werte des Kupplungsmoments begrenzt werden, und es wird eine jeweils gültige, an Einflussgrößen, die das Kupplungsverhalten verändern, adaptierte Kupplungskennlinie durch Interpolation zwischen den Werten der Minimalkennlinie und den Werten der Maximalkennlinie berechnet.

Zweckmäßige Weiterbildungen der Erfindung sind in den Unteransprüchen niedergelegt. Die Adaption der Kupplungskennlinie wird mit einem Fuzzy-Lernsystem durchgeführt, das einem vorgegebenen Kupplungsmodell entspricht, welches abhängig von empfangenen Sensorsignalen und einem Fehlerwert verändert wird. Die Abszisse der Kupplungspositionen wird durch Skalieren oder Verschieben auf den Wert eins oder auf Werte zwischen null und eins normiert. Eingangsgrößen eines Kupplungsmodells werden durch ein Fuzzy-Modell nichtlinear auf eine Interpolationsvariable abgebildet. Die Minimal- und Maximal-Kennlinien werden durch Messungen auf einem Prüfstand unter Extrembedingungen gemessen oder während des Einsatzes ausgehend von einer gemessenen Momentencharakteristik permanent angepasst.

Für jeden Messwert der Kupplungskennlinien wird ein Glaubensmaß ermittelt, das der Zuverlässigkeit entspricht, mit dem der Messwert behaftet ist. Bei hohem Glaubensmaß eines Messwerts werden größere Adaptionsschritte durchgeführt als bei niedrigem Glaubensmaß. Das Glaubensmaß wird aus einer normierten Streuung, insbesondere der Standardabweichung, berechnet.

Die Vorteile der Erfindung liegen insbesondere darin, dass die Form der interpolierten Kennlinie prinzipiell immer eine Mischung aus der Form aller Extrem-Kennlinien ist, und dass sie damit vorhersehbar ist. Die für eine Kupplungsbetätigung zu fordernden Monotonie-Eigenschaften bleiben erhalten und damit ist jederzeit garantiert, dass es für einen Wert der Kupplungsposition auch einen eindeutigen Wert des Kupplungsdrehmoments gibt. Die durch die Extrem-Kennlinien vorgegebenen unteren und oberen Grenzen werden von der interpolierten Kennlinie eingehalten, da sie immer zwischen den Extrem-Kennlinien liegt.

Ausführungsbeispiele der Erfindung werden im folgenden anhand der Zeichnungen erläutert. Es zeigen:

Figur 1      das Blockschaltbild einer Steuerung für eine Kupplung in dem Antriebsstrang eines Kraftfahrzeugs;

Figur 2      ein Schaltbild eines Modells, mit dem die Kennlinieninterpolation gesteuert wird;

Figur 3      ein die Kennlinieninterpolation verdeutlichendes Diagramm, und

Figur 4      ein Struktogramm eines bei dem erfindungsgemäßen Verfahren abgearbeiteten Programms.

Ein Antriebsstrang 1 eines Kraftfahrzeugs besteht im Wesentlichen aus einem Verbrennungs-Motor 2, einer automatisch betätigten Kupplung 3, einem Getriebe 4 und einem Antrieb 5, der - da allgemein bekannt, hier nicht im einzelnen dargestellt - Gelenkwellen, Differentiale, Achsantriebe und Räder umfasst. Die Kurbelwelle 7 des Motors 2, die Ausgangswelle 8 der Kupplung 3 und die Ausgangswelle 9 des Getriebes 4 sind durch Pfeile dargestellt. Der Motor 2 wird durch eine Motorsteuerung 10 gesteuert.

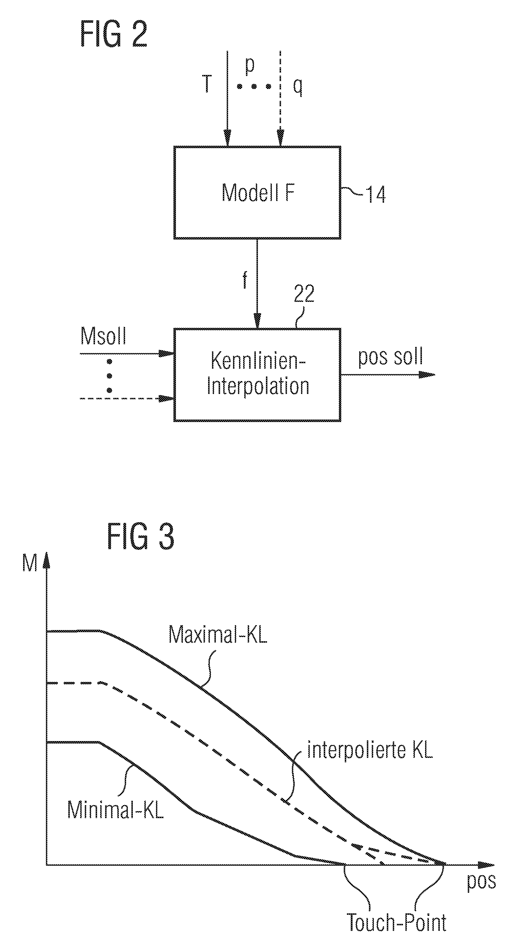

Eine Kupplungssteuerung 12 weist auf eine Sollwerterzeuger-Schaltung 14, die ein adaptiertes Kupplungsmodell (Modell F) enthält, einen Lage- oder Positionsregelkreis 15 und eine Druckversorgung 16. Streckenmodelle von automatisch betätigten Kupplungen sind für sich bekannt (siehe zum Beispiel PCT/DE00/00520). Mit dem Kupplungsmodell F, auf das anhand von Figur 2 noch eingegangen wird, wird eine Sollposition erzeugt, die als Eingangssignal an einen elektrischen Regler 17 gelegt wird. Der elektrische Regler 17 steuert ein elektrohydraulisches Ventil 18, das mit einem Zylinder 20 eine Linearbewegung einer Ausrückplatte der Kupplung 3 erzeugt und dabei die Kupplung ein- und ausrückt. Die Linearbewegung stellt somit den Ausrückweg der Kupplung 3 dar, der der Kupplungs-Position entspricht, die die Regelgröße des Regelkreises 15 ist.

Der Ausrückweg wird von einem Wegsensor 21 erfasst und an den elektrischen Regler 17 als Istposition rückgemeldet. Die Druckversorgung 16 liefert den zum Betätigen der Kupplung 3 erforderlichen Hydraulikdruck an das Ventil 18. Die Druckversorgung 16, das elektrohydraulische Ventil 18 und der Zylinder 20 bilden zusammen einen Kupplungsaktuator.

Die Kupplung kann auch elektromotorisch betätigt sein. Es kann sich auch um eine Nasskupplung handeln, sofern die Lage der Kupplung als Position erfasst ist. Wird das zu übertragende Drehmoment ('Kapazität') mit einem hydraulischen Druck eingestellt, so ist die Messgröße Position durch den Parameter Druck zu ersetzen.

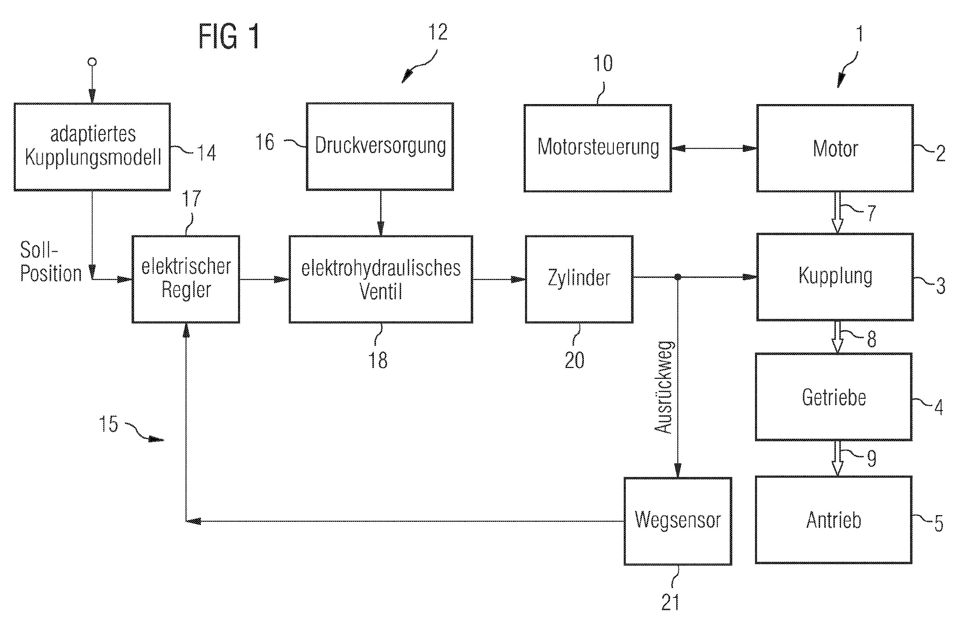

Bei automatisch betätigten Kupplungen treten prinzipbedingt einige regelungstechnische Ungenauigkeiten auf. Dies betrifft sowohl Trocken- als auch Nasskupplungen. Grundsätzlich ist das richtige Kupplungsmoment einzustellen, das heißt durch dosiertes Schließen der Kupplung ein definiertes Übertragungsmoment sicherzustellen. Üblicherweise weisen Kraftfahrzeuge jedoch keinen Drehmomentsensor auf, sondern lediglich einen Wegesensor, der den Ausrückweg misst. Aus Figur 1 ist ersichtlich, dass das Kupplungsmoment, das über die Ausgangswelle 8 übertragen wird, nicht in dem geschlossenen Regelkreis 15 enthalten ist, es ist somit fehlerbehaftet. Da es aber hier die eigentlich interessierende Größe ist, werden die Fehler mit Hilfe des Kupplungsmodells F kompensiert.

Dabei wird mit dem Kupplungsmodell F die Kupplungskennlinie nicht in an sich bekannter Weise direkt adaptiert, sondern es werden eine Minimal-Kennlinie und eine Maximal-Kennlinie (Figuren 2 und 3) erzeugt, und die jeweils gültige Kennlinie wird daraus durch Interpolation berechnet. Die Interpolation kann im einfachsten Fall als eine Linearkombination zwischen der Minimal- und Maximal-Kennlinie realisiert werden. Hier wird aber ein viel allgemeinerer Lösungsweg eingeschlagen, der diese lineare Interpolation als Spezialfall mit enthält.

Immer wenn hier von einer "Kennlinie" die Rede ist, kann auch ein Kennfeld eingesetzt werden. Dies verallgemeinert den Modellansatz. Das Kupplungsmoment wird nicht allein abhängig von der Kupplungsposition, sondern auch von weiteren Größen - unter anderem der Temperatur, dem Verschleiß, der Drehzahl - modelliert. Damit entsteht nicht eine eindimensionale Kennlinie sondern ein mehrdimensionales Kennfeld.

Eine sogenannte Interpolationsvariable f (Figur 2), die Werte zwischen null und eins annehmen kann, wird mit dem nichtlinearen Modell F berechnet, wie noch beschrieben wird. Eingangsgrößen sind die Temperatur T der Kupplungsscheibe und der Andrückplatte und weitere Einflussgrößen wie die Alterung und der Verschleiß des Kupplungsbelags, der kurzzeitige Energieeintrag, die Drehzahlen und so weiter, die hier durch die Variablen p, q, ... angedeutet sind. Als kurzzeitiger Energieeintrag wird die während der Dauer des Kupplungsschlupfes aufintegrierte Leistung, insbesondere die Energiemenge bezeichnet, die eine Änderung des Reibbeiwertes bewirkt. Dies kommt beim Anfahren (am Berg) oder bei Schaltvorgängen unter Volllast (besonders bei Doppelkupplungsgetrieben) vor.

Mit der Interpolationsvariablen f wird die interpolierte Kennlinie nach folgender Formel berechnet:

$$InterpolierteKennlinie = (1 - f) \times Minimalkennlinie + f \times Maximalkennlinie \qquad (Gl.1)$$

Das Modell F beschreibt den Einfluss aller relevanten Größen T, p, q, V, ... auf die Kennlinie Kupplungsposition-Kupplungsmoment. Dies erfolgt vorteilhafterweise mit Fuzzy-Regeln (siehe weiter hinten). Ausgangssignal des Modells ist die Interpolationsvariable f, die zwischen der Minimal- und Maximalkennlinie interpoliert. Regeln, die zu einem hohen Kupplungsmoment führen sollen, müssen demnach Singletons (oder Ausgangszugehörigkeitsfunktionen) aufweisen, die nahe bei f = 1 liegen. Regeln, die zu einem niedrigen Kupplungsmoment führen sollen, müssen demnach zu Modellausgängen nahe bei f = 0 führen.

Das gesamte (inverse) Kupplungsmodell setzt sich zusammen aus einer Interpolationsschaltung 22 und dem Modell F (Schaltung 14). Eine solche Aufteilung bietet gegenüber einer Modellierung in nur einem Block die bereits genannten Vorteile. Das Modell F bildet seine Eingangsgrößen T, p, q, ... nichtlinear auf die Interpolationsvariable f ab. Im einfachsten Grenzfall wäre das Modell F linear und hätte nur einen Eingang. Dann würde das Modell eine lineare Interpolation zwischen den beiden Extremkennlinien (Minimal- und Maximal-Kennlinie) durchführen.

Die Interpolation der Kennlinien wird somit in der Interpolationsschaltung 22 durchgeführt. Mit der interpolierten Kennlinie und dem Sollwert des Kupplungsmoments Msoll wird die Sollposition der Kupplung pos_soll bestimmt, wie in Figur 2 vereinfacht dargestellt ist. Im Blockschaltbild von Figur 1 ist die Interpolationsschaltung 22 mit dem adaptierten Kupplungsmodell F in der Sollwerterzeugerschaltung 14 zusammengefasst.

Wesentliches Element des vorliegenden Verfahrens ist es, das Modell F zu adaptieren und auf diesem Wege einen (indirekten) Einfluss auf die interpolierte Kupplungskennlinie auszuüben.

Durch diese Adaption kann die interpolierte Kennlinie nur zwischen den beiden Extremkennlinien Maximal-KL und Minimal-KL (Figur 3) verändert werden. Dadurch ergeben sich unter anderem die eingangs genannten Vorteile gegenüber einer direkten Adaption der Kennlinie.

Erreicht die Kupplung ihren Berührpunkt oder "Touch-Point", beginnt sie, Drehmoment von dem Motor auf das Getriebe zu übertragen. Mit zunehmender Änderung ihrer Position pos nimmt das Kupplungsmoment M zu, bis bei völlig eingerückter Kupplung (pos = 0 in der Darstellung von Figur 3) das gesamte Motordrehmoment übertragen wird. Aus der Figur 3 wird ersichtlich, dass die Interpolation zwischen den beiden Extrem-Kennlinien für Positionen rechts vom Touch-Point (M = 0) der Minimal-Kennlinie unplausible Ergebnisse liefert. Der Touch-Point der interpolierten Kennlinie ist mit dem der Maximal-Kennlinie für f ≠ 0 identisch. Eine erweiterte, verbesserte Lösung ergibt sich dadurch, dass der Touch-Point (TP) der interpolierten Kennlinie wie folgt berechnet wird:

$$\text{interpolierter TP} = (1-f) \times \text{TP der Minimal-KL} + f \times \text{TP der Maximal-KL.} \qquad \text{(Gl.2)}$$

Ein vorteilhafter Verlauf der interpolierten Kennlinie, insbesondere bezüglich der Lage des Touch-Points und der Extremwerte der Kennlinie (Wert am rechten und linken Rand), wird mit einer der folgenden Methoden erzeugt:

♦ Die Abszisse (x-Achse) der Kupplungspositionen pos wird normiert, und zwar durch Skalieren oder Verschieben, zum Beispiel zwischen 0 (voll eingekuppelt) und 1 (Touch-Point). Für die beiden Extrem-Kennlinien ergeben sich unterschiedliche Normierungsfaktoren, da beide einen unterschiedlichen Touch-Point aufweisen. Für die interpolierte Kennlinie wird jeweils der interpolierte Touch-Point nach obiger Formel verwendet. Durch diese Normierung liegen die (normierten) Touch-Points aller Kennlinien aufeinander, und das oben erwähnte Interpolationsproblem tritt nicht mehr auf. Nach der Interpolation wird die Normierung rückgängig gemacht und damit die zu verwendende Kennlinie berechnet.

♦ Alle Kennlinien werden auf den am weitesten rechts liegenden Touch-Point verschoben. Da die Kennlinien im eingekuppelten Bereich (linker Teil von Figur 3) wegen der Sättigung der Kupplungskennlinie nahezu konstant verlaufen, können die nach rechts verschobenen Kennlinien links konstant extrapoliert werden. Damit kann die Interpolation ohne Schwierigkeiten durchgeführt werden. Anschließend wird die Verschiebung wieder rückgängig gemacht.

♦ Es wird eine lineare Interpolation durchgeführt, und zwar zwischen dem Kennlinienwert am Touch-Point der Minimal-Kennlinie und dem nach obiger Formel berechneten interpolierten Touch-Point (siehe die gestrichelte Linie in Figur 3) .

♦ Es wird eine Kombination der beschriebenen Verfahren durchgeführt.

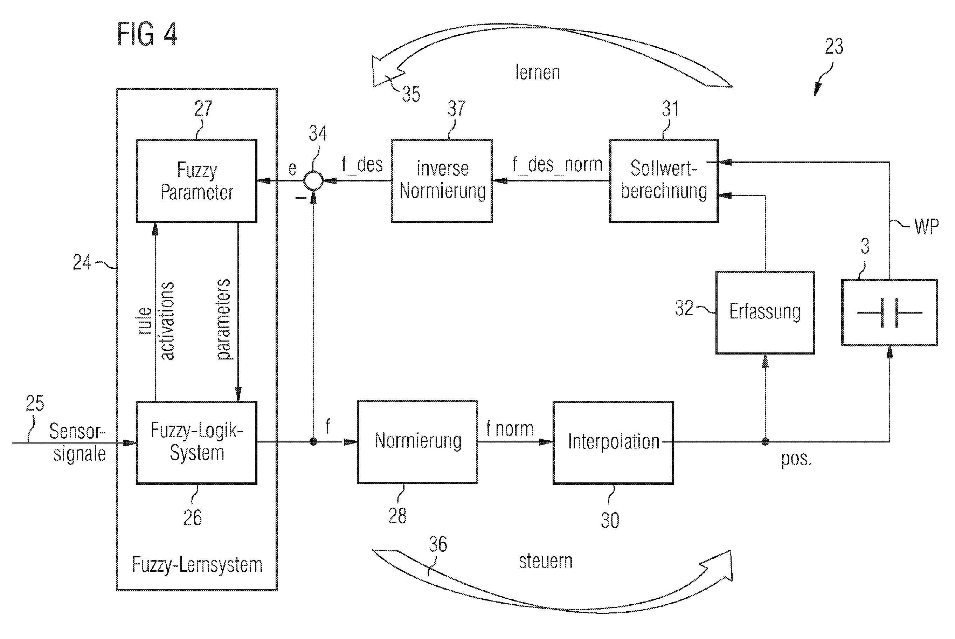

Das Struktogramm eines Adaptionsprogramms 23 (Figur 4) zeigt, wie das Modell F erfindungsgemäß adaptiert, das heißt an die verschiedenen Einflussgrößen, die das Kupplungsverhalten beeinflussen, angepasst wird. Die Adaption wird mit einem Fuzzy-Lernsystem 24 durchgeführt, das einem vorgegebenen Kupplungsmodell F entspricht, welches abhängig von empfangenen Sensorsignalen 25 und einem Fehlerwert *e* verändert wird.

Das Adaptionsprogramm 23 schließt folgende Schritte ein:

S1    Beschaffen eines Referenzwertes, das heißt eines Soll-Punktes, der das Kupplungsmoment M_soll abhängig von den Eingangsgrößen (insbesondere von der Kupplungsposition pos_soll) angibt. Dies erfolgt durch Messen oder Berechnen, zum Beispiel in der Motorsteuerung 10, und zwar aus dem Motordrehmoment abzüglich der Momentverluste.

S2  Berechnen eines Sollwerts f_des der Interpolationsvariablen, bei welchem die interpolierte Kennlinie exakt durch den Soll-Punkt verlaufen würde.

S3  Berechnen eines Fehlers, das heißt der Differenz zwischen dem Sollwert der Interpolationsvariablen und dem tatsächlichen Wert der Interpolationsvariablen: $e = f\_des - f$ .

S4  Adaption des Modells mit Hilfe des Fehlers $e$.

Sensorsignale 25 (Figur 4) liefern als Eingänge des Modells F alle erwähnten Größen, welche die Momentencharakteristik der Kupplung signifikant beeinflussen. Das Fuzzy-Lernsystem 24 enthält ein Fuzzy-Logik-System 26 und Fuzzy-Parameter 27. Die Wirkungsweise von Fuzzy-Logik-Systemen ist für sich bekannt, speziell für Lernsysteme ist sie zum Beispiel beschrieben in der Patentschrift DE 197 52 623 C2. Die hier abgearbeiteten Fuzzy-Regeln werden weiter unten aufgeführt. Durch das Fuzzy-Logik-System 26 wird die Interpolationsvariable f erzeugt und an einen Normierungsblock 28 ausgegeben, in dem die Variable f auf Werte zwischen null und eins normiert und eine normierte Interpolationsvariable f_norm ausgegeben wird. Die verschiedenen Rechen- oder Bestimmungsblöcke werden im folgenden einfach auch als Blöcke bezeichnet.

Die normierte Interpolationsvariable f_norm bewirkt in einem Interpolations-Block 30 die Interpolation der Kupplungskennlinie. Von diesem Block 30 wird ein die Kupplungslage bestimmendes Signal pos an die Kupplung 3 übermittelt. Das Signal pos wird in einem Erfassungsblock 32 erkannt, und daraufhin die Kupplungslage an einen zweiten Eingang des Blocks 31 übergeben. Von der Kupplung 3 gelangt ein aus der aktuellen Kupplungslage und dem Kupplungsmoment bestehendes Wertepaar WP an einen dritten Eingang des Blocks 31.

In dem Block 31 wird aus den empfangenen Daten ein normierter Sollwert f_des_norm der Interpolationsvariablen berechnet. In einem Block 37 wird eine inverse Normierung durchgeführt, und ein nicht mehr normierter Sollwert f_des an den Plus-Eingang eines Addiergliedes 34 gelegt. An dessen Minus-Eingang liegt der von dem Fuzzy-Logik-System 26 ausgegebene Wert der Interpolationsvariablen f an. Der damit gebildete Fehler- oder Differenzwert $e$ wird an das Fuzzy-Lernsystem 24 rückgemeldet und beeinflusst die Fuzzy-Parameter 27. Der Fehlerwert $e$ ist die entscheidende Information in dem Lernverfahren für die Fuzzy-Parameter. Als Lernverfahren kommen bekannte iterative oder rekursive lineare Adaptionsverfahren in Frage, zum Beispiel der LMS- oder RLS-Algorithmus (siehe z.B. Kapitel 3.2, Seiten 60-66, in dem Buch "Nonlinear System Identifikation" (Nelles), Springer, Berlin, 2001).

Durch das Fuzzy-Logik-System 26 werden in dem Block 27 die Fuzzy-Regeln aktiviert, der Block 27 übermittelt die Fuzzy-Parameter an das Fuzzy-Logik-System 26. Fuzzy-Parameter oder Singletons sind die Zahlen in dem "Dann-Teil" von Fuzzy-Regeln, also in dem weiter hinten aufgeführten Beispiel von Fuzzy-Logik-Standardregeln die Werte 0,1 bis 0,9.

Die Adaption wird in ihrer Geschwindigkeit und Robustheit verbessert, wenn die Zuverlässigkeit des jeweiligen Messwerts oder Referenz-Datums bekannt ist. Beispielsweise sind etliche Mess- und Rechenmethoden in verschiedenen Situationen unterschiedlich genau und zuverlässig. Daraus lässt sich für jeden Referenzwert ein Glaubensmaß (oder Konfidenzwert) ermitteln. Ein hohes Glaubensmaß drückt aus, dass man dem Referenzwert eine hohe Genauigkeit und Zuverlässigkeit zutraut. Bei der Adaption der Kupplungskennlinien wird das Glaubensmaß vorteilhaft verwendet, indem größere Adaptionsschritte durchgeführt werden, wenn das Glaubensmaß des Referenzwerts hoch ist als wenn es niedrig ist.

Es lässt sich für jeden Messwert ein Glaubensmaß g einführen, das zwischen 0 und 1 liegt. Je mehr Vertrauen man in einen Messwert hat, um so größer ist das Glaubensmaß zu wählen. Das Glaubensmaß wird entweder a priori von dem entwickelnden Ingenieur aufgrund seines Wissens über die Genauigkeit der angewendeten Meßmethode gewählt oder automatisch aus einer normierten Streuung (zum Beispiel der Standardabweichung) der Messdaten berechnet. Je stärker die Messdaten streuen, desto kleiner wird g, beispielsweise gemäß der Formel:

$$g = 1-(s/s\_\text{max}) \qquad\qquad (\text{Gl.3})$$

wobei s die Standardabweichung der Daten und s_max die maximal mögliche Standardabweichung der Daten ist.

Dieses Glaubensmaß g wird dann in dem Lernverfahren derart berücksichtigt, dass es mit der Lernrate multipliziert wird. Für den LMS-Algorithmus ergibt sich damit die erweiterte Gleichung:

$$\text{theta\_neu} = \text{theta\_alt} + \text{eta} \times \text{mue} \times e \qquad\qquad (\text{Gl.4})$$

wobei theta_neu der neue Parameterwert, theta_alt der alte Parameterwert, eta die Lernrate, mue der normierte Fuzzy-Regel-Erfüllungsgrad (Aktivierung der Regel, die den Singleton oder Fuzzy-Parameter im Dann-Teil enthält) und $e$ der Fehler ist.

Messdaten für die Adaption stammen von unterschiedlichen Meßmethoden, die unterschiedlich genaue Ergebnisse liefern. Beispielsweise lassen sich Positions/Momenten-Messpunkte über folgende zwei Methoden bestimmen:

Methode 1: Beim Anfahren wird aus dem Motormoment das Kupplungsmoment dynamisch berechnet. Da sich beim Anfahren viele dynamische Effekte und starke, weniger gut modellierbare Temperatureinflüsse bemerkbar machen, ist diese Methode nicht besonders genau, erzeugt aber viele Datenpunkte, weil der Anfahrvorgang relativ lange dauert. Daher ist das Glaubensmaß klein zu wählen, zum Beispiel g = 0,1.

Die Methode 1 kann statt beim Anfahren auch bei einem Gangwechsel (das heißt beim Schalten) durchgeführt werden. Da nur ungenau modellierbare Temperatureinflüsse eine geringere Rolle spielen, ist diese Methode genauer als Methode 1, liefert allerdings auch weniger Datenpunkte, da Gangwechsel schneller vonstatten gehen als das Anfahren. Daher ist das Glaubensmaß hier mittelgroß zu wählen, zum Beispiel g=0,3.

Methode 2: Während der Fahrt wird die Kupplungsposition solange verstellt, bis ein kleiner Kupplungsschlupf festgestellt wird. Hierbei kann jeweils ein Datenpunkt mit hoher Genauigkeit gesammelt werden (übertragenes Moment ist gleich dem übertragbaren Moment bei der Position, an welcher gerade der Schlupf auftritt). Daher ist das Glaubensmaß groß zu wählen, zum Beispiel g = 1,0.

Der Signalfluss zum Steuern der Kupplung 3 wird durch einen geschwungenen Pfeil 36 und der Signalfluss zum Adaptieren der Kupplungskennlinie oder "Lernen" durch einen geschwungenen Pfeil 35 verdeutlicht.

Das Modell F kann außer als Fuzzy-System auch als neuronales Netz, Polynom o.ä. realisiert werden. Als vorteilhaft erweist sich die Realisierung als Fuzzy-System, die zum Beispiel gegenüber neuronalen Netzen im Hinblick auf die vorliegende Anwendung folgende Vorteile ausweist:

- Die Regelstruktur und damit die Transparenz des Wissens bleibt jederzeit erhalten.
- Durch das Festhalten der Regelstrukturen und der Eingangszugehörigkeitsfunktionen ist einerseits die Lernflexibilität eingeschränkt, anderseits wird damit eine große Robustheit gegenüber schlechten oder falschen Daten erreicht.
- Einzelne Fuzzy-Regeln können nicht-adaptierbar gestaltet werden, um in vorgegebenen Arbeitsbereichen ein bestimmtes Verhalten zu garantieren.

Speziell die Wahl eines Fuzzy-Systems vom Takagi-Sugeno Typ nullter Ordnung (Nelles 0.: "Nonlinear System Identification", Springer, Berlin, 2001, Seiten 304-309) oder eines Fuzzy-Systems mit Singletons als Ausgangszugehörigkeitsfunktionen (beides ist identisch) haben für die Adaption folgende Vorteile:

- Es existiert ein einziges Optimum, keine lokalen Nebenoptima.
- Die Optimierungsverfahren konvergieren garantiert, das heißt sie können nicht instabil werden, weil sich die maximalen Lernraten theoretisch berechnen lassen.
- Es findet eine schnelle Konvergenz zum Optimum statt.
- Eine Implementierung in Festkommaarithmetik ist einfach möglich.

Damit kann die Adaption des Modells mit einem Standardverfahren, wie zum Beispiel LMS ("least mean squares") oder ähnliches, durchgeführt werden. Allerdings muss als Nebenbedingung darauf geachtet werden, dass die Singletons stets zwischen 0 und 1 liegen, damit sich keine ungeeigneten Interpolationsvariablen ergeben können. Dass die Interpolationsvariablen immer zwischen 0 und 1 (100%) liegen muss, ist aus der Interpolationsformel unmittelbar ersichtlich. Diese Nebenbedingung lässt sich beispielsweise auf folgende Weise einhalten: Wenn sich nach einer Parameter-Aktualisierung ein Wert theta_neu kleiner als 0 ergibt, wird dieser Wert auf 0 korrigiert. Wenn sich ein Wert größer als 1 ergibt, wird theta_neu auf 1 gesetzt.

Als Eingänge des Modells F kommen alle Größen in Frage, welche die Momentencharakteristik der Kupplung signifikant beeinflussen, insbesondere die Temperatur des Reibbelags, der Druckplatte, der Feder und des Getriebeöls, aber auch die Motor- und Getriebedrehzahl, ein kurzfristiger Energieeintrag, die akkumulierte Reibleistung, die Abnutzung, die Fahrzeuglängsbeschleunigung und ähnliches. Ist Vorwissen über den Einfluss dieser Größen vorhanden, kann dieses in Regelform in das Fuzzy-Modell F eingebracht werden.

Je mehr Vorwissen über das System verwendet wird, desto schneller wird die Adaption sein und desto weniger Daten sind für eine bestimmte Modellgenauigkeit notwendig. Steht hingegen kein oder kaum Vorwissen zur Verfügung, lassen sich recht allgemeine Fuzzy-Logik-Standardregeln aufstellen, deren Ausgangszugehörigkeitsfunktionen dann über die Adaption angepasst werden. Diese Standardregeln lauten für den Fall einer Eingangsgröße, der Temperatur T, beispielsweise wie folgt:

| Wenn | T = klein | Dann f = 0,1 |
|------|-----------|--------------|

(fortgesetzt)

| Wenn | T = mittel | Dann f = 0,5 |
|------|-----------|--------------|
| Wenn | T = groß | Dann f = 0,9 |

Für den Fall zweier Eingangsgrößen, der Temperatur T und dem Verschleiß V, lauten die Standardregeln wie folgt:

| Wenn T = klein | und V = klein | dann f = 0,3 |
|----------------|---------------|--------------|
| Wenn T = mittel | und V = klein | dann f = 0,6 |
| Wenn T = groß | und V = klein | dann f = 0,9 |
| Wenn T = klein | und V = groß | dann f = 0,1 |
| Wenn T = mittel | und V = groß | dann f = 0,4 |
| Wenn T = groß | und V = groß | dann f = 0,7 |

Die Zugehörigkeitsfunktionen "klein", "mittel", "groß" werden etwa als Dreiecke oder Trapeze gewählt, die die entsprechenden Temperaturbereiche abdecken. Wenn bekannt ist, dass sich die Momentencharakteristik in bestimmten Temperaturbereichen stärker ändert als in anderen, werden dort vorteilhafter Weise mehrere Zugehörigkeitsfunktionen für kleinere Temperaturbereiche definiert. Die Werte "0,1", ... , "0,9" sind die Singletons, die über die Adaption angepasst werden. Die Anzahl der Regeln bestimmt die Flexibilität des Systems und muss als Kompromiss zwischen gewünschter Adaptionsgeschwindigkeit (wenige Regeln) und hoher Adaptionsgenauigkeit (viele Regeln) gewählt werden, und naturgemäß auch mit Rücksicht auf den Ressourcenbedarf hinsichtlich Rechenzeit und Speicherbedarf.

Die Minimal- und Maximal-Kennlinien werden entweder vorab durch Messungen auf einem Prüfstand unter Extrembedingungen gemessen oder während des Einsatzes ausgehend von einer gemessenen Momentencharakteristik permanent angepasst. Letzteres läuft beispielsweise so ab, dass die Maximal-Kennlinie immer so weit nach "oben" (in Richtung größerer Momente) verschoben oder skaliert wird, dass sie nie unter den zur Adaption verwendeten Soll-Punkten liegt. Entsprechendes gilt für die Minimal-Kennlinie nach "unten" (in Richtung kleinerer Momente). Diese Vorgehensweise stellt sicher, dass stets alle bekannten Messpunkte zwischen den beiden Extrem-Kennlinien liegen.

## Patentansprüche

1. Verfahren zum Steuern einer automatisch betätigten Kupplung (3), die zwischen dem Motor (2) und dem Getriebe (4) eines Kraftfahrzeugs angeordnet ist und die durch einen Kupplungsaktuator (16, 18, 20) ein- und ausgerückt wird, dessen Lage von einem Lageregelkreis (15) derart gesteuert wird, dass durch den Lageregelkreis (15) eine Differenz zwischen einer Sollposition und der Istposition der Kupplung (3) ermittelt und die Kupplung (3) in ihre Sollposition gebracht wird, in der ein vorgegebenes Drehmoment von dem Motor (2) auf das Getriebe (4) übertragen wird,

   - wobei das zu übertragende Drehmoment (M) nach einer Kupplungskennlinie (KL) in Abhängigkeit von der Kupplungsposition gesteuert wird, und
   - wobei die Kupplungskennlinie (KL) zur Kompensation von Änderungen des Kupplungsverhaltens korrigiert wird,

   **dadurch gekennzeichnet,**

   - **dass** eine Minimalkennlinie (Minimal-KL) und eine Maximalkennlinie (Maximal-KL) erzeugt werden, durch die die von der Kupplungsposition abhängigen Werte des Kupplungsmoments begrenzt werden, und
   - **dass** eine jeweils gültige, an Einflussgrößen, die das Kupplungsverhalten verändern, adaptierte Kupplungskennlinie (interpolierte KL) durch Interpolation zwischen den Werten der Minimalkennlinie und den Werten der Maximalkennlinie berechnet wird.

2. Verfahren nach Anspruch 1, **dadurch gekennzeichnet, dass** die Adaption der Kupplungskennlinie mit einem Fuzzy-Lernsystem (24) durchgeführt wird, das einem vorgegebenen Kupplungsmodell (F) entspricht, welches abhängig von empfangenen Sensorsignalen (25) und einem Fehlerwert ($e$) verändert wird.

3. Verfahren nach Anspruch 1, **dadurch gekennzeichnet, dass** die Abszisse der Kupplungspositionen (pos) durch Skalieren oder Verschieben auf den Wert eins normiert wird.

4. Verfahren nach Anspruch 1, **dadurch gekennzeichnet, dass** die Abszisse der Kupplungspositionen (pos) durch Skalieren oder Verschieben auf Werte zwischen null und eins normiert wird.

5. Verfahren nach Anspruch 1, **dadurch gekennzeichnet, dass** Eingangsgrößen (T, p, q, ...) eines Kupplungsmodells (F) nichtlinear auf eine Interpolationsvariable (f) abgebildet werden.

6. Verfahren nach Anspruch 1, **dadurch gekennzeichnet, dass** die Minimal- und Maximal-Kennlinien durch Messungen auf einem Prüfstand unter Extrembedingungen gemessen werden.

7. Verfahren nach Anspruch 1, **dadurch gekennzeichnet, dass** die Minimal- und Maximal-Kennlinien während des Einsatzes der Kupplung ausgehend von einer gemessenen Momentencharakteristik permanent angepasst werden.

8. Verfahren nach Anspruch 1, **dadurch gekennzeichnet, dass** für jeden Referenzwert der Kupplungskennlinien ein Glaubensmaß (g) ermittelt wird, das der Zuverlässigkeit entspricht, mit dem der Messwert behaftet ist.

9. Verfahren nach Anspruch 8, **dadurch gekennzeichnet, dass** bei hohem Glaubensmaß (g) eines Referenzwerts größere Adaptionsschritte durchgeführt werden als bei niedrigem Glaubensmaß.

10. Verfahren nach Anspruch 8, **dadurch gekennzeichnet, dass** das Glaubensmaß (g) gemäß der Formel:

$$g = 1 - (s / s\_max),$$

berechnet wird, wobei s die Standardabweichung der Daten und s_max die maximal mögliche Standardabweichung der Daten ist.

## FIG 1

Block diagram (FIG 1):

- **adaptiertes Kupplungsmodell** (14)
- **Druckversorgung** (16) — labeled 12
- **Motorsteuerung** (10)
- **Motor** (2) — labeled 1
- **elektrischer Regler** (17)
- **elektrohydraulisches Ventil** (18)
- **Zylinder** (20)
- **Kupplung** (3)
- **Getriebe** (4)
- **Antrieb** (5)
- **Wegsensor** (21)

Labels: Soll-Position, Ausrückweg, 15, 7, 8, 9

EP 1 437 520 A2

FIG 2

$T$  $p$  $\bullet\bullet\bullet$  $q$

Modell F  — 14

$f$

22

Msoll

Kennlinien-Interpolation

pos soll

FIG 3

$M$

Maximal-KL

interpolierte KL

Minimal-KL

Touch-Point

pos

FIG 4

EP 1 437 520 A2